# EUROPEAN PATENT SPECIFICATION

(11) **EP 4 231 618 B1**
(45) Date of publication and mention of the grant of the patent: **01.04.2026**
(21) Application number: 23157836.0
(22) Date of filing: 21.02.2023
(51) Int. Cl.: H04M 3/42, H04M 7/00, H04L 65/1016, H04L 65/1069, H04L 65/1094

(54) **METHOD FOR MANAGING AND/OR SIGNALING AT LEAST ONE VOIP CALL AND A COMMUNICATION SYSTEM**
VERFAHREN ZUR VERWALTUNG UND/ODER SIGNALISIERUNG MINDESTENS EINES VOIP-ANRUFS UND KOMMUNIKATIONSSYSTEM
PROCÉDÉ DE GESTION ET/OU DE SIGNALISATION D'AU MOINS UN APPEL VOIP ET SYSTÈME DE COMMUNICATION

(30) Priority: 22.02.2022 EP 22158067
(43) Date of publication of application: 23.08.2023
(73) Proprietor: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Blumbach · Zinngrebe Patentanwälte PartG mbB

(56) References cited:
- WO-A1-2011/126505
- US-A1- 2007 140 150
- US-A1- 2015 189 073
- "3rd Generation Partnership Project; Technical Specification Group Core Network and Terminals; IP Multimedia (IM) Subsystem Cx and Dx interfaces; Signalling flows and message contents (Release 17)", vol. CT WG4, no. V17.0.0, 16 December 2021 (2021-12-16), pages 1 - 82, XP052083134, Retrieved from the Internet <URL:https://ftp.3gpp.org/Specs/archive/29_series/29.228/29228-h00.zip 29228-h00.docx> [retrieved on 20211216]

## Description

### Description

The present invention is directed to a method for managing and /or signaling at least one VoIP call using a communication system that preferably comprises an IMS system (IP multimedia subsystem) and a cloud-based customer management system registered on the IMS system as well as a communication system in particular configured to perform the method.

### Background

Known telecommunications systems employ an IP multimedia subsystem (IMS), which for example supports access to different communication services and the establishment of VoIP sessions between user devices. The user devices involved in the VoIP sessions are directly and permanently registered on and connected to the IMS system.

US2015/0189073A1 presents a mediation server between an IMS network and an IP-TV network

US2007/0140150A1 presents a system for providing blended IMS and IP-TV services to customers using VoIP capable terminals.

WO2011/126505A1 presents a push based service to establish an invitation based connection service.

### Summary of the Invention

The invention is defined in the appended claims. The scope of protection is solely determined by this set of claims.

It is an object of the present invention to provide a method and a communication system using an IMS system, wherein the method and the communication system avoid the need for VoIP capable devices associated with a customer to be directly and permanently registered on and connected to the IMS system.

In particular, it is an advantage of the present invention that user devices configured to receive incoming VoIP calls do not need a permanent connection to the communication system and the IMS system, respectively.

In addition, the method and the communication system preferably enable a device, which is not capable to receive or handle a VoIP call, to be used to inform the customer on an incoming VoIP call.

A core aspect of the present invention can be seen in that a communication system comprises an IMS system and a cloud-based customer management system, which is registered on and configured to communicate with the IMS system. Moreover, at least one customer and at least one VoIP capable device and, if available, at least one non-VoIP capable device each associated with the at least one customer are registered on the cloud-based customer management system. Only if an incoming VoIP call destined for the customer is indicated to the cloud-based customer management system the devices associated with the at least one customer are notified thereon and preferably woken up by the cloud-based customer management system. In other words: As long as no incoming VoIP call has been notified by the cloud-based customer management system to the devices associated with the at least one customer, the devices may be held in a stand-by modus.

According to a preferred aspect, a method is provided according to independent claim 1.

The information of an incoming VoIP call may include for example an address of the calling party.

In a preferred embodiment, the IMS system preferably is configured to notify the cloud-based customer management system of any VoIP session request message the IMS system receives from a calling party, in particular of any invite message concerning a VoIP call, once the cloud-based customer management system is registered on the IMS system. In particular, the IMS system preferably is configured to notify the cloud-based customer management system of any VoIP session request message, which comprises an address of a VoIP capable device that is associated with the cloud-based customer management system, wherein said address of the VoIP capable device preferably is stored on the IMS system or on a home subscriber server, which is accessible by the IMS system or which is part of the IMS system, together with an information that any VoIP session request message directed to this address is to be forwarded to the cloud-based customer management system.

According to a preferred embodiment, at least two VoIP capable devices may be associated with the customer. Further, a different address, e.g. a phone number and/or an IP address, is assigned to each of the VoIP capable devices, wherein the different addresses are registered together with the identifier of the customer on the cloud-based customer management system. The method may comprise the steps of:
a) Receiving, at the IMS system, a VoIP session request message from a calling party, a VoIP session request message, which includes an SDP (session description information) offer and the address of one of the at least two VoIP capable devices or any information identifying the customer;
b) Forwarding, by the IMS system, the VoIP session request message to the cloud-based customer management system;
c) Sending or pushing, by the cloud-based customer management system, in response to the VoIP session request message a first notification message to each of the at least two VoIP capable devices associated with the customer, the first notification message including an information about an incoming VoIP call;
d) Notifying the cloud-based customer management system of the VoIP capable device of the at least two VoIP capable devices, which is prepared to accept the incoming VoIP call;
e) Forwarding, by the cloud-based customer management system, the VoIP session request message only to said VoIP capable device notified at step d) to the cloud-based customer management system;
f) Sending, by said VoIP capable device notified at step d) to the cloud-based customer management system, a message including an SDP answer in response to the SDP offer to the cloud-based customer management system;
g) Forwarding the SDP answer, by the cloud-based customer management system, to the IMS system.

It should be noted, that each first notification message may include a command to be executed by each device associated with the customer to generate for example a wakeup signal and/or a ringing signal and/or any acoustic and/or optic information. In particular, in response to the first notification message received at step c), an optic and/or acoustic signal indicating an incoming VoIP call, may be generated by each of the devices associated with the customer.

Furthermore, it should be mentioned, that each of the VoIP capable devices is preferably configured to support the Session Initiation Protocol (SIP). Preferably, each of the VoIP capable devices can be implemented as a softphone on a computer, as a mobile phone, e.g. a smartphone, as a fixed-line telephone or the like.

Preferably, step g) may further comprise the steps of forwarding the SDP answer from the IMS system to the calling party and establishing a VoIP session between the calling party and said VoIP capable device notified at step d) to the cloud-based customer management system.

According to a preferred embodiment, step d) may comprise the step of sending, only by said VoIP capable device, which is prepared to accept the incoming VoIP call, in response to the first notification message a message to the cloud-based customer management system, indicating the acceptance of the incoming VoIP call.

According to a further aspect, a non-VoIP capable device, e.g. a TV device, may be associated with the customer, wherein
step c) may comprise the step of sending or pushing, by the cloud-based customer management system, a first notification message including an information about an incoming VoIP call also to the non-VoIP capable device associated with the customer, and wherein
step d) may comprise the steps of selecting, by the customer, only the VoIP capable device, preferably of the at least two VoIP capable devices, which is prepared to accept the incoming VoIP call, by using the non-VoIP capable device and sending, by the non-VoIP capable device, an information about the selected VoIP capable device to the cloud-based customer management system.

According to a preferred embodiment, a second notification message may be sent or pushed, by the cloud-based customer management system, to each of the VoIP capable device not notified at step d) to the cloud-based customer management system, wherein each of the second notification message may include for example a command to stop generating the optic and/or acoustic signal.

After a VoIP session between the calling party and the VoIP capable device notified at step d) to the cloud-based customer management system has been established, preferably a call notification message for notifying about an ongoing call is sent, by the cloud-based customer management system, to at least one VoIP capable device associated with the customer different from said VoIP capable device notified at step d) to the cloud-based customer management system and/or to at least one non-VoIP capable device associated with the customer. Said call notification message preferably comprises a call identification information identifying the ongoing call between the calling party and the VoIP capable device notified at step d) to the cloud-based customer management system, in the following also referred to as call id for short, and an information identifying the calling party.

The call notification message informing about an ongoing call may be sent to the other devices based on a push or on a pull mode. In a push mode, the cloud-based customer management system automatically sends a call notification message, in particular to all other devices associated with customer, which are not party of the ongoing call. In a pull mode, the cloud-based customer management system sends a call notification message to a VoIP capable device or a non-VoIP capable device in response to a request received from the respective device.

A call notification message informing about an ongoing call may in particular be automatically sent by the cloud-based customer management system, when a VoIP session has been established and/or when a device is newly registered on the cloud-based customer management system and/or when a VoIP call is terminated.

Informing another device associated with the customer about an ongoing call, of which the device is not a party, in particular enables the other device to initiate a call transfer of the ongoing call from the VoIP capable device currently being party of the ongoing call, i.e. the VoIP capable device notified at step d) to the cloud-based customer management system, to a different VoIP capable device.

Accordingly, the method preferably comprises the step of transferring an ongoing call between the calling party and the VoIP capable device notified at step d) to the cloud-based customer management system from the VoIP capable device notified at step d) to the cloud-based customer management system to a different VoIP capable device associated with the customer. For initiating the call transfer, the cloud-based customer management system is notified of the VoIP capable device to which the ongoing call is to be transferred. The respective notification message may be sent to the cloud-based customer management system by the VoIP capable device, to which the ongoing call is to be transferred, or by another device, which may also be a non-VoIP capable device associated with the customer.

It is to be noted that the call id is not changed by performing the call transfer, i.e. the call between the calling party and the VoIP capable device, to which the ongoing call is transferred, is associated with the same call id as was the ongoing call before call transfer.

Preferably, the method may comprise the steps of generating and storing, by the cloud-based customer management system, a call history with respect to the customer.

The call history may for example include information about each incoming and/or outgoing VoIP call, an interruption or termination of an established VoIP session, a VoIP call acceptance or the deny of a VoIP request and/or missed calls.

Preferably, the method may comprise the step of providing at least a portion of the stored call history and retrieving, by the customer and by one of the devices associated with the customer, respectively, at least the portion of the stored call history.

Preferably, the method may comprise the step of storing at least the portion of the call history in form of a webpage retrievable by the customer.

It should be noted that at least one of the VoIP capable devices and/or the non-VoIP capable device associated with the customer can be implemented to retrieve and download from the cloud-based customer management system at least the portion of the call history belonging to the customer. Therefore, a respective software client (APP) can be stored on and executed by the respective VoIP capable devices and/or the non-VoIP capable device.

According to a further preferred aspect, a communication system is provided according to independent claim 9.

According to a preferred embodiment, at least two VoIP capable devices may be associated with the customer, a different address being assigned to each of the VoIP capable devices associated with the customer, wherein the different addresses are registered together with the identifier of the customer on the cloud-based customer management system, wherein
the cloud-based customer management system is configured to
- receive, from the IMS system, a VoIP session request message generated by a calling party, the VoIP session request message including an SDP (session description information) offer and an address of one of the at least two VoIP capable devices,
- send, in response to the VoIP session request message, a notification message to each of the at least two VoIP capable devices associated with the customer, the notification message including an information about an incoming VoIP call,
- receive a message notifying the cloud-based customer management system of the VoIP capable device of the at least two VoIP capable devices, which is prepared to accept the incoming VoIP call,
- forward the VoIP session request message only to said VoIP capable device notified to the cloud-based customer management system,
- receive a message including an SDP answer from said VoIP capable device notified to the cloud-based customer management system, and to
- forward the SDP answer to the the IMS system for forwarding the SDP answer to a calling party.

Preferably, a non-VoIP capable device, e.g. a TV device, may be associated with the customer, wherein the cloud-based customer management system is configured to send a notification message including an information about an incoming VoIP call also to the non-VoIP capable device associated with the customer, and wherein the non-VoIP capable device is configured to
generate in response to a customer's action an information about the VoIP capable device, which is prepared to accept the incoming VoIP call and to send this information to the cloud-based customer management system.

In a preferred embodiment, the IMS system preferably is configured to notify, once the cloud-based customer management system is registered on the IMS system, the cloud-based customer management system of any VoIP session request message the IMS system receives from a calling party, in particular of any invite message concerning a VoIP call. In particular, the IMS system preferably is configured to notify the cloud-based customer management system of any VoIP session request message, which comprises an address of a VoIP capable device that is associated with the cloud-based customer management system, wherein said address of the VoIP capable device preferably is stored, together with an information that any VoIP session request message directed to this address is to be forwarded to the cloud-based customer management system, on the IMS system or on a home subscriber server, said home subscriber server being accessible by the IMS system or being part of the IMS system.

Preferably, the cloud-based customer management system is configured to send a notification message for notifying about an ongoing call between a calling party and a first of the at least two VoIP capable devices associated with the customer to the other of the at least two VoIP capable devices associated with the customer and/or to the non-VoIP capable device associated with the customer, wherein the cloud-based customer management system is configured to manage a call transfer of the ongoing call from the first VoIP capable device to a different one of the at least two VoIP capable devices associated with the customer, wherein the cloud-based customer management system is configured to receive, for initiating the call transfer, a notification of the VoIP capable device to which the ongoing call is to be transferred, in particular from the VoIP capable device to which the ongoing call is to be transferred or from the non-VoIP capable device.

Thus, the customer may with advantage transfer an ongoing VoIP call from one VoIP capable device to another VoIP capable device, e.g. the customer may seamlessly switch an ongoing VoIP call from a softphone on his computer to his smartphone without interrupting the ongoing call, wherein the customer may even initiate the call transfer using a different device, which may be a non-VoIP capable device, such as a tablet computer without a microphone or a TV device.

Preferably, the cloud-based customer management system may be configured to generate and store a call history with respect to the customer. The call history may include for example information about each incoming and/or outgoing VoIP call, an interruption or termination of an established VoIP session, a VoIP call acceptance or the deny of a VoIP request and/or a missed call.

Preferably, the cloud-based customer management system is configured to provide at least a portion of the stored call history retrievable by the customer and in particular by at least one of the VoIP capable devices or the non-VoIP capable device associated with the customer.

Preferably, at least the portion of the stored call history is stored on the CMS system 60 in form of a webpage retrievable by the customer and, in particular, by at least one of the VoIP capable devices or the non-VoIP capable device associated with the customer.

It should be noted that at least one of the VoIP capable devices and/or the non-VoIP capable device associated with the customer can be implemented to retrieve and download from the cloud-based customer management system at least the portion of the call history belonging to the customer. Therefore, a respective software client (APP) can be stored on and executed by the respective VoIP capable devices and/or the non-VoIP capable device.

### Brief Description of the Drawings

The invention is described in detail below by way of preferred embodiments in connection with the accompanying drawings, wherein
- Figure 1: shows an exemplary message flow diagram for establishing a VoIP communication session using an exemplary communication system including at least one VoIP capable device associated with a customer,
- Figure 2: shows a further exemplary message flow diagram for establishing a VoIP communication session using an exemplary communication system including the at least one VoIP capable device depicted in figure 1 and in addition a non-VoIP capable device associated with the customer,
- Figure 3: shows an exemplary message flow diagram for performing a call transfer after a VoIP communication session has been established, and
- Figure 4: shows a further exemplary message flow diagram for performing a call transfer, wherein the call transfer is initiated by a non-VoIP capable device associated with the customer.

### Detailed Description of exemplary Embodiments

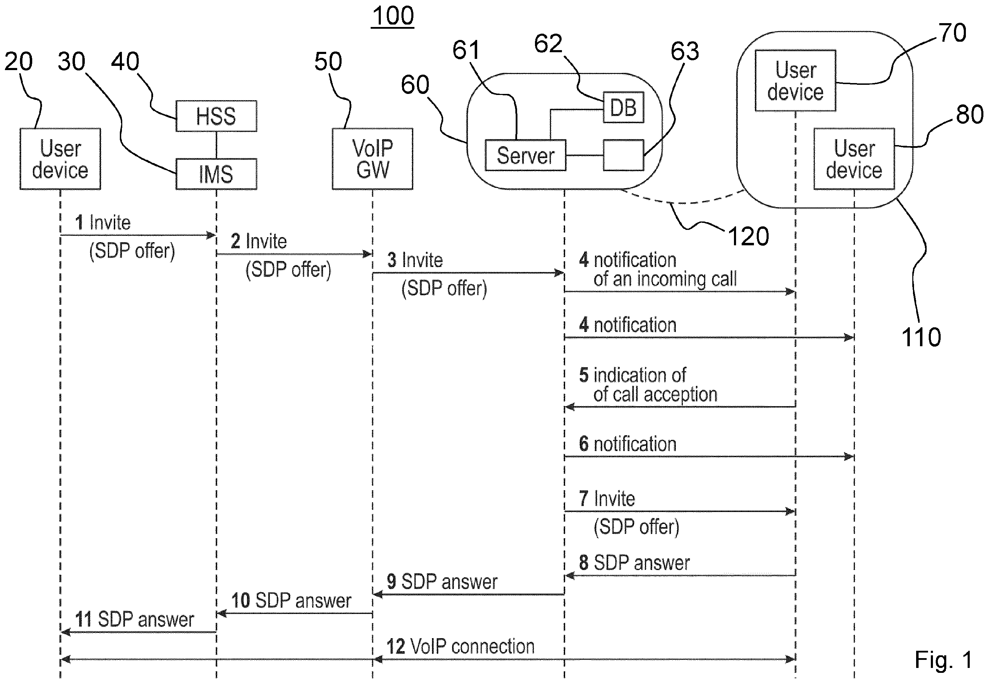

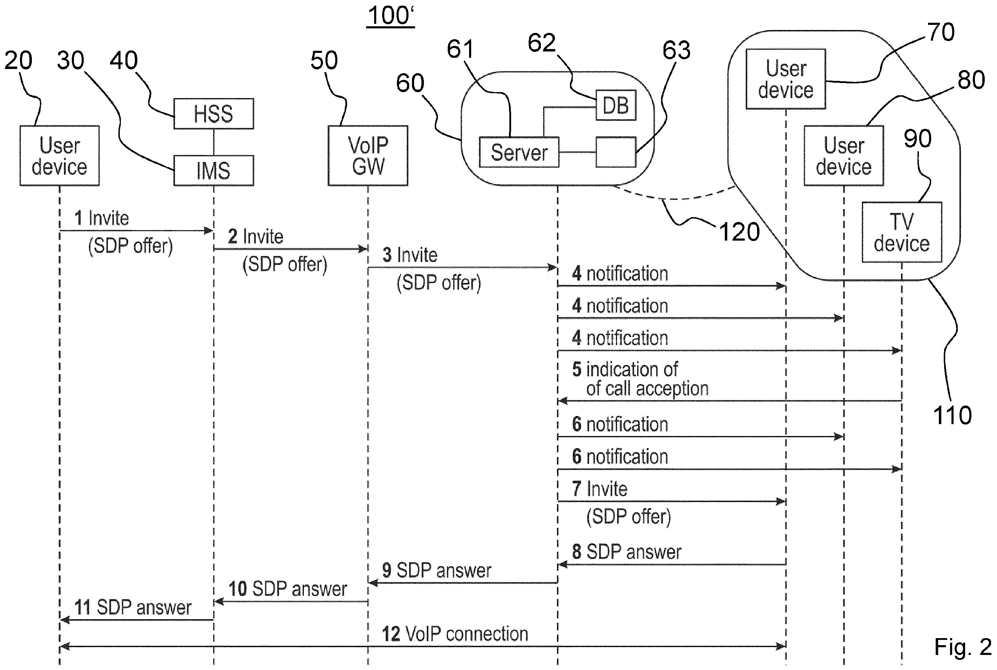

Referring now to figure 1, an exemplary communication system 100 is schematically depicted, which is configured to preferably manage and/or signal VoIP calls and to preferably support the establishment of a real-time VoIP communication sessions between calling parties and called parties. For example, a called party may be a customer and/or at least one device associated with the customer. The customer is symbolized in figure 1 and also in figure 2 by a circle carrying the reference number 110.

In the preferred embodiment shown in figure 1, two VoIP capable devices 70 and 80 are associated to the customer 110. In practice, at least one VoIP capable device is associated with a customer. For example, VoIP capable device 70 can be implemented as a smartphone, whereas VoIP capable device 80 can be implemented as a softphone on a computer. Preferably, each of the VoIP capable devices 70 and 80 is configured to support at least partially the Session Initiation Protocol (SIP). Furthermore, a different address is assigned to each of the VoIP capable devices 70 and 80. The address may be for example an individual phone number or an IP address.

In particular, the exemplary communication system 100 of figure 1 may comprise a cloud-based call management system 60 and an IP multimedia subsystem 30, also called IMS system. The cloud-based customer management system 60, in the following also called CMS system, is registered on the IMS system 30. For example an IP address is assigned to the CMS system 60. In particular, the CMS system 60 can be registered on IMS system 30 by using its IP address. The IP address of the CMS system 60 may be stored for example on a home subscriber server 40, which is accessible by the IMS system 30 or which may be part of the IMS system 30. Preferably, the IMS system 30 is configured to notify, once the CMS system 60 is registered on the IMS system 30, the CMS system 60 of any invite message concerning a VoIP call.

At least customer 110 and the VoIP capable devices 70 and 80, associated with the customer 110, are registered on the cloud-based customer management system 60. In order to register customer 110 and the VoIP capable devices 70 and 80, a predetermined identification or identifier of customer 110, the addresses assigned to the VoIP capable devices 70 and 80 and, preferably, a correlation between the identifier of the customer 110 and the respective addresses can be stored on the CMS system 60. Preferably, these data can be stored in a storage 62 implemented on the CMS system 60. For example, the storage 62 may store the data in form of a database or look-up table. It should be noted, that in practice identifications or identifiers of a plurality of customers and the respective addresses of their VoIP capable devices can managed by the CMS system 60 and stored on the CMS system 60 in the storage 62, respectively. The identifier is preferably a unique identifier of the respective customer.

The cloud-based customer management system 60 may further comprise at least one server device 61 or a network of connected server devices, which is connectable to the storage 62. The CMS system 60 and the server device 61, respectively, may be configured to generate for example a call history with respect to each registered customer. A further storage 63 can be implemented in the CMS system 60, which might be configured to store a call history of each VoIP communication session concerning the respective customer. For example, with respect to each customer registered on the CMS system 60, information about each incoming and/or outgoing VoIP call, the interruption or termination of an established VoIP session, each VoIP call acceptance or the deny of a VoIP request, a missed VoIP call and the like call can be stored as a call history on storage 63. At least some of the information/call history stored with respect to a registered customer can be provided to the respective customer and the registered devices associated with the respective customer, respectively. The information can be provided by and/or stored on the CMS system 60 in form of a webpage retrievable by the respective customer over the Internet, for example.

It should be noted that at least one of the VoIP capable devices 70, 80 associated with the customer 110 can be implemented to retrieve and download from the cloud-based customer management system 60 and the storage 63, respectively, at least the portion of the call history belonging to the customer 110. Therefore, a respective software client (APP) can be stored on and executed by the respective VoIP capable devices 70 and 80.

Preferably, the identifier of the customer 110 and/or the addresses of the VoIP capable devices 70 and 80 associated with the customer 110 may be stored on the IMS system 30 and on the home subscriber server 40, respectively, to inform the IMS system 30 that the customer 110 and the customer's devices 70 and 80 are entitled to get access to a VoIP service provided by the communication system 100. On the IMS system 30, this stored information preferably is associated with the information that any VoIP session request message the IMS system receives from a calling party, in particular any invite message concerning a VoIP call, which is directed to a VoIP capable device associated with the customer 110, is to be forwarded to the CMS system 60.

It is to be noted that there is advantageously no need for the VoIP capable devices 70 and 80 to be permanently connected to the IMS system 30 in order to receive a VoIP session request message, as would be the case for a VoIP capable device directly registered on the IMS system 30.

In a preferred embodiment, the CMS system 60 and the IMS system 30 can communicate via a VoIP gateway 50, which may belong to the IMS system 30. The operation and task of such a VoIP gateway 50 are known to a person skilled in the art.

Preferably, the IP address of the VoIP gateway 50 is known to the IMS system 30 and the CMS system 60, whereas the VoIP gateway 50 knows an IP address of the CMS system 60 and an IP address of the IMS system 30 so that messages may be transmitted from the IMS system 30 via the VoIP gateway 50 to the CMS system 60 and vice versa..

Also shown in figure 1 is a calling party 20, which may be implemented as a VoIP-capable and SIP (Session Initiation Protocol) capable telephone 20. SIP and IMS is, for example, described by Gerd Siegmund in the reference book "Technik der Netze 2", ISBN 978-3-7785-4063-3, 6. völlig neu bearbeitete und erweiterte Auflage, 2009 Hüthig Verlag.

It should be noted, that the CMS system 60 and the VoIP capable devices 70, 80 are each preferably configured to communicate via an IP-based data network 120, e.g. the Internet, with each other. In practice, each of the VoIP capable devices 70, 80 is preferably configured to get access to the IP-based data network 120 via an access network. In the preferred embodiment, the VoIP capable device 70 comprises, for example, a wireless communication interface configured to communicate via a radio access network like LTE with the IP-based data network 120. Furthermore, the VoIP capable device 80 may comprise a fixed-line communication interface configured to communicate via fixed-line access network like DSL with the IP-based data network 120. In a similar way, the VoIP gateway 50 and the CMS system 60 may be each configured to communicate via an IP-based data network, e.g. the Internet, with each other.

Now a preferred scenario is described in connection with figure 1 to illustrate the function and operation of the exemplary communication system 100.

It is assumed, that the calling device 20 now generates a VoIP session request message, also called an invite message, using the Session Initiation Protocol SIP. The invite message preferably includes an SDP (Session Description Protocol) offer and, as an address, for example the phone number or IP address of the customer's device 70. The SDP offer may include attributes of the multimedia data stream to be used; in the present case attributes of a VoIP session. Furthermore, the SDP offer preferably contains a list of different codecs supported by the calling device 20. As is known, SDP is used for example to support negotiation of the codec to be used, transport protocols and addresses between a calling party and a called party. At step 1, the VoIP session request message is sent from the calling device 20 to the IMS system 30 using SIP in a known manner.

The VoIP session request message is received and analyzed by the IMS system 30 to determine what to do. Preferably, the IMS system 30 checks, whether the phone number included in the VoIP session request message is for example registered on the home subscriber server 40. In the present exemplary case, the IMS system 30 recognizes that a VoIP session shall be established to customer 110 and the device 70, respectively, and that customer 110 is entitled to get access to the VoIP service of the communication system 100. As a result, the VoIP session request message is preferably forwarded, at step 2, by the IMS system 30 to the VoIP gateway 50 using the IP address of the VoIP gateway 50. At step 3, the VoIP session request message is preferably forwarded by the VoIP gateway 50 to the cloud-based customer management system 60 using the IP address of the CMS system 60 and the server 61, respectively.

The CMS system 60 and the server 61, respectively, is configured for example to analyze the received VoIP session request message in connection with the data stored in storage 62. As a result, the CMS system 60 recognizes that the phone number of device 70 included in the VoIP session request message is linked along with the phone number of the device 80 to customer 110. The CMS system 60 and the server 61, respectively, is further configured, to generate a first notification message including an information of an incoming VoIP call, for example the calling number of the device 20 and/or a user name. In addition, the first notification message may include a command causing devices 70 and 80 to generate a ringing signal and/or optical signal indicating an incoming VoIP.

It should be noted, that although the calling party has used the phone number of the device 70 it is preferably up to the customer 110 to decide which of its devices 70 and 80 shall be used to accept the incoming VoIP call. Therefore, the CMS 60 is configured to send or push, at step 4, a first notification message to each of the at least two VoIP capable devices 70, 80 associated with the customer 110 via the IP-based data network 120 using for example IP addresses assigned to the VoIP capable devices 70 and 80. Preferably, each of the VoIP capable devices 70 and 80 may be further configured to execute the command contained in first notification message, which causes the respective device to generate for example a ringing signal and/or an optic information signaling an incoming VoIP call.

At step 5, the CMS system 60 is notified preferably by the customer 110 of the VoIP capable device of the two VoIP capable devices 70 and 80, which is prepared to accept the incoming VoIP call, i.e. which shall terminate the requested VoIP communication session. In the present case, device 70 shall be used with respect to the incoming VoIP call. For example, the customer 110 may cause the device 70, for example by entering a respective command on the device 70, to send, by using the IP address of the CMS system 60, an identification message to the CMS system 60 indicating that device 70 is prepared to accept the incoming VoIP call.

The CMS system 60 and the server 61, respectively, is preferably configured to send or push, at step 6, in response to the identification message received from the VoIP capable device 70 a second notification message to the VoIP capable device 80 not notified to the CMS system 60, wherein the second notification message includes a command to cause the VoIP device 80 to stop generating the optic and/or ringing signal.

Furthermore, the CMS system 60 and the server 61, respectively, is preferably configured to forward, at step 7, in response to the identification message received from the VoIP capable device 70 the VoIP session request message only to the VoIP device 70 notified to the CMS system 60.

The VoIP device 70 is preferably configured to
i) generate in response to the SDP offer included in the VoIP session request message received from the CMS system 60 a message including an SDP answer and
ii) to send this message, at step 8 to the CMS system 60 and Server 61, respectively.

The CMS system 60 and the server 61, respectively, is configured to forward the message including the SDP answer, if implemented, to the VoIP gateway 50 at step 9, wherein the IMS system 30, is configured to forward the received SDP answer to the calling device 20 at step 11. It is to be noted, that the message including the SDP answer may also include the address of the calling device 20.

Now, the requested real- time VoIP communication session can be established between the calling device 20 and the customer's device 70 at step 12 in order to exchange VoIP signals.

It should be noted, that if only one VoIP capable device, e.g. device 70, is associated with the customer 110, the operation and function of the communication system 100 is very similar to that illustrated above in connection with two VoIP capable devices 70 and 80. The differences are that a first notification message is pushed at step 4 only to the device 70 and step 6 is omitted.

Furthermore, it should be noted that the CMS system 60 can be preferably configured to collect meta data of the calling party 20, which are stored for example on the IMS system 30, and to push them to the VoIP capable devices 70 and/or 80 associated with the customer 110 acting as a called party. The meta data may include information about the name of the calling user, the phone number and/or an IP address of the device 20. In addition, the current state of each established real-time VoIP sessions, .e.g. the VoIP session established at step 12, the duration of an ongoing VoIP session, termination or holding of an VoIP session may be protocolled by the CMS system 60 and the respective information may be stored ion the storage 63 for further use. In particular, the CMS system 60 may inform the VoIP devices 70 and 80 associated with customer 110 on that VoIP capable device, which is currently the called endpoint of the VoIP session established at step 12.

Now, a further scenario is described in connection with figure 2 to illustrate the operation and function of a communication system 100'. The communication system 100' differs from the communication system 100 as shown in figure 1 in that a non-VoIP capable device 90 is now associated along with the VoIP capable devices 70 and 80 with the customer 110. The non-VoIP capable device 90 may be a TV device or a smart speaker. It is assumed, that the non-VoIP capable device 90 is a TV device, which does not support the SIP protocol. However, an IP address can be assigned to the TV device 90. Therefore, the customer 110 and the devices 70 to 90 associated with the customer 110 are now registered on the CMS system 60. For example, an identifier of the customer 110 is stored together with the respective addresses of the VoIP capable devices 70, 80 and the non-VoIP capable device 90 in the storage 62. It should be noted that the non-VoIP capable device 90 associated with the customer 110 can be implemented to retrieve and download from the cloud-based customer management system 60 at least the portion of the call history belonging to the customer 110. Therefore, a respective software client (APP) can be stored on and executed by the non-VoIP capable device.

For the sake of simplicity it is assumed, that the calling device 20 now generates similar to the first scenario illustrated above a VoIP session request message, also called an invite message, using the Session Initiation Protocol SIP. The invite message preferably includes an SDP (Session Description Protocol) offer and, as an address, for example the phone number and/or IP address of the VoIP capable device 70 associated with the customer 110, which acts as a called party. As a result, steps 1 to 3 as depicted in figure 2 are preferably identical to steps 1 to 3 of figure 1. Therefore, it is now assumed that the CMS system 60 and the server 61, respectively has received the VoIP session request message from the VoIP gateway 50 as illustrated above in connection with figure 1.

The CMS system 60 and the server 61, respectively, is configured to analyze the received VoIP session request message in connection with the data stored in storage 62. As a result, the CMS system 60 recognizes that the phone number of device 70 included in the VoIP session request message is linked along with the registered addresses of the devices 80 and 90 to customer 110. The CMS system 60 and the server 61, respectively, is further configured, to generate a first notification message for each of the devices 70, 80, and 90. Each first notification message may include for example an information of an incoming VoIP call, for example the calling number of the device 20 and/or a user name. In addition, each first notification message may include a command causing devices 70, 80 and 90 to generate a ringing signal and/or an optical signal indicating an incoming VoIP. Preferably, the first notification message destined for the TV device 90 may include a command, which causes the TV device 90, if the command is executed by the TV device 90, to depict for example symbols of the VoIP capable devices 70 and 80 on its display. It is assumed, that the TV device 90 comprises a touch screen.,

It should be noted, that although the calling party has used the phone number of the device 70 it is preferably up to the customer 110 to decide which of its devices 70 and 80 shall accept or terminate the incoming VoIP call. Therefore, the CMS 60 is configured to send or push, at step 4, the respective first notification message to each of the two VoIP capable devices 70, 80 as well as to the TV device 90 via the IP-based data network 120 using for example the IP addresses assigned to the VoIP capable devices 70 and 80 and to the TV device 90. Preferably, each of the VoIP capable devices 70 and 80 and the TV device 90 may be further configured to execute the command contained in the respective first notification message, which causes for example the respective devices 70, 80 and 90 to generate for example a ringing signal and/or an optic information signaling an incoming VoIP call. In addition, as mentioned above, the TV-device 90 may be configured to depict for example symbols of the VoIP capable devices 70 and 80 on its touch screen.

At step 5, the CMS system 60 is notified preferably by the customer 110 of the VoIP capable device of the two VoIP capable devices 70 and 80, which is prepared to accept the incoming VoIP call, i.e. which shall accept the requested VoIP communication session. In the present case, device 70 shall accept the incoming VoIP call. For example, the customer 110 may touch with a finger the symbol of the VoIP capable device 70 on the touch screen of the TV device 90, thereby causing the TV-device 90 to send, by using the IP address of the CMS system 60, an identification message to the CMS system 60 indicating that a different device, namely device 70 is prepared to accept, i.e. to receive the incoming VoIP call.

The CMS system 60 and the server 61, respectively, is preferably configured to send or push, at step 6, in response to the identification message received from the TV device 90 a second notification message to both the VoIP capable device 80 and to the TV device 90 which have been not notified to the CMS system 60, wherein the second notification message received by the device 80 may include a command to cause the VoIP capable device 80 to stop generating the optic and/or ringing signal, whereas the second notification message received by the TV device 90 may include a command to cause the TV device 80 to stop generating the optic and/or ringing signal and/or to depict an information on the touch screen indicating that the VoIP device 70 has been successfully selected to accept the incoming VoIP call.

Furthermore, the CMS system 60 and the server 61, respectively, is preferably configured to forward, at step 7, in response to the identification message received from the TV device 90 the VoIP session request message only to the selected VoIP device 70 notified to the CMS system 60.

The VoIP device 70 is preferably configured, to
i) generate in response to the SDP offer included in the VoIP session request message received from the CMS system 60 a message including an SDP answer and
ii) to send this message, at step 8 to the CMS system 60 and Server 61, respectively.

The CMS system 60 and the server 61, respectively, is configured to forward the message including the SDP answer, if implemented, to the VoIP gateway 50 at step 9, wherein the IMS system 30, is configured to forward the received SDP answer to the calling device 20 at step 11. It is to be noted, that the message including the SDP answer may also include the address of the calling device 20.

Now, the requested real- time VoIP communication session can be established between the calling device 20 and the customer's device 70 at step 12 in order to exchange VoIP signals.

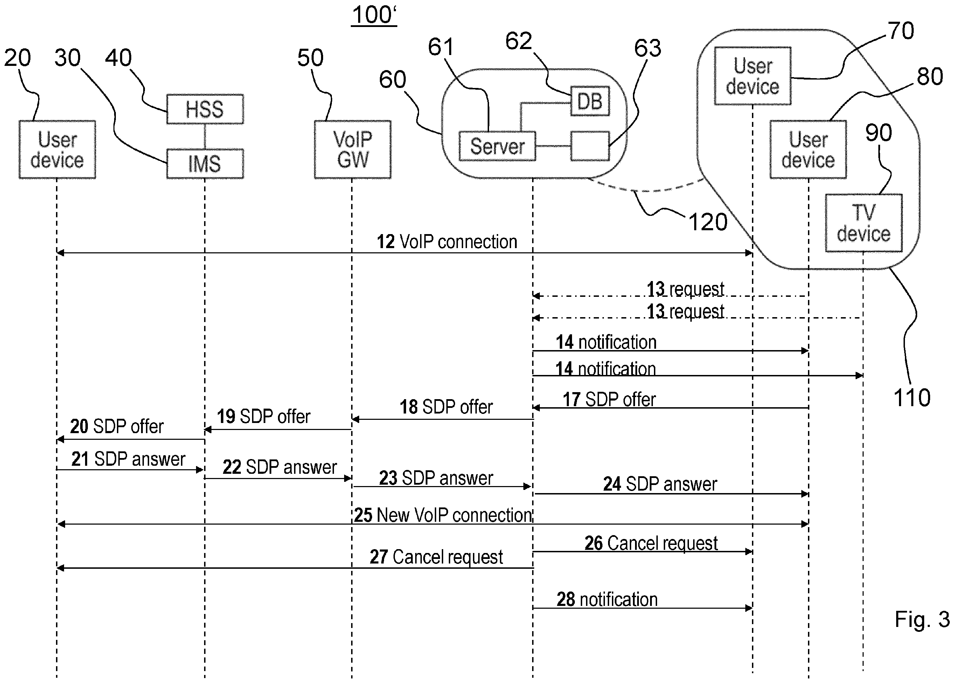

Now, a further scenario is described in connection with figure 3 to illustrate a call transfer being performed after a VoIP communication session has been established, wherein the call transfer is exemplary described in the context of the communication system 100' as shown in figure 2.

After the real- time VoIP communication session has been established between the calling device 20 and the customer's device 70 at step 12, the customer may decide to continue the call on a different device, for example the customer may decide to switch from device 70 to device 80.

For this purpose, the CMS system 60 preferably is configured to send a call notification message for notifying about an ongoing call to at least one VoIP capable device associated with the customer, which is different from the VoIP capable device 70 currently taking part in the established VoIP communication session, and/or to at least one non-VoIP capable device associated with the customer,. The call notification message in particular comprises a call identification information, call id for short, identifying the ongoing call between the calling party 20 and the VoIP capable device 70 and an information identifying the calling party 20.

In a push mode, the call notification messages may be pushed in step 14 to each of the devices 80 and 90. Alternatively, a pull mode may used, in which each device may send in step 13 a request to the CMS system 60, which comprises a query for a list of ongoing calls. In this variant, the CMS system 60 in step 14 sends a notification message to a device in response to receiving a respective request from the device in step 13.

Due to the described notification messages, the devices 80 and 90 are aware of the ongoing call between the calling party 20 and the device 70. Preferably, a device may display to the customer any ongoing call of which is has been notified by the CMS system 60. In the embodiment shown in figure 3, the customer decides to take the ongoing call on his other VoIP capable device 80 and provides a respective input on device 80.

In step 17, the VoIP capable device 80 then sends a request to take the call to the CMS system 60, said request preferably comprising a respective SDP offer. It is to be noted, that the request including the SDP offer may also include the address of the calling device 20. The request message is received and analyzed by the CMS system 60 to determine what to do. In the present exemplary case, the CMS system 60 recognizes that the ongoing call shall be transferred to device 80. As a result, the SDP offer is preferably forwarded, at step 18, by the CMS system 60 to the VoIP gateway 50 using the IP address of the VoIP gateway 50. At step 19, the SDP offer is forwarded by the VoIP gateway 50 to the IMS system 30 using the IP address of the IMS system 30. The SDP offer is received and analyzed by the IMS system 30 and is then forwarded to the calling device 20 in step 20.

In response to the received SDP offer the calling device 20 generates a respective SDP answer to set up a second media stream and sends the SDP answer in step 21 to the IMS system 30. The IMS system 30 receives and analyzes the SDP answer, which preferably comprises the address of device 80. In the present exemplary case, the IMS system 30 recognizes that a VoIP session shall be established to customer 110 and the device 80, respectively, and that customer 110 is entitled to get access to the VoIP service of the communication system 100. As a result, the SDP answer is preferably forwarded, at step 22, by the IMS system 30 to the VoIP gateway 50 using the IP address of the VoIP gateway 50. At step 23, the SDP answer is preferably forwarded by the VoIP gateway 50 to the CMS system 60 using the IP address of the CMS system 60 and the server 61, respectively.

The CMS system 60 and the server 61, respectively, is configured to analyze the received SDP answer in connection with the data stored in storage 62. As a result, the CMS system 60 recognizes that the address of device 80 included in the SDP answer is linked to customer 110 and that it is related to a call transfer. Accordingly, the CMS system 60 forwards the SDP answer to the VoIP capable device 80.

As a result, in step 25 a new VoIP connection is established between the calling device 20 and the VoIP capable device 80.

The VoIP connection that had been established in step 12 is then canceled, wherein for this purpose the CMS system 60 sends respective cancel requests, in step 26 to the VoIP capable device 70 and in step 27 to the calling device 20. Although not shown in figure 3, the cancel request that is sent in step 27 to the calling device 20 may preferably be sent via the gateway 50 and the IMS system 30.

When a push mode is used for sending notification messages for informing about ongoing calls, preferably a respective notification message is sent by the CMS system 60 to the device 70 in step 28, informing the device 70 about the ongoing call between the calling device 20 and the device 80, so that the device 70 is enabled to take the call back, should the customer decide to do so. It is to be noted that there is no need to send new notification messages to the other devices of the customer, in the shown embodiment only one further device 90 being present, since the information transmitted in the earlier notification message is still valid, because the calling device 20 as participant of the call and the call id have not changed.

If a call is terminated by one of the parties, the CMS system 60 is aware of that and preferably sends a respective notification message to all of the customer's devices, which were not participants of the now terminated call, in order to respectively update the list of ongoing calls.

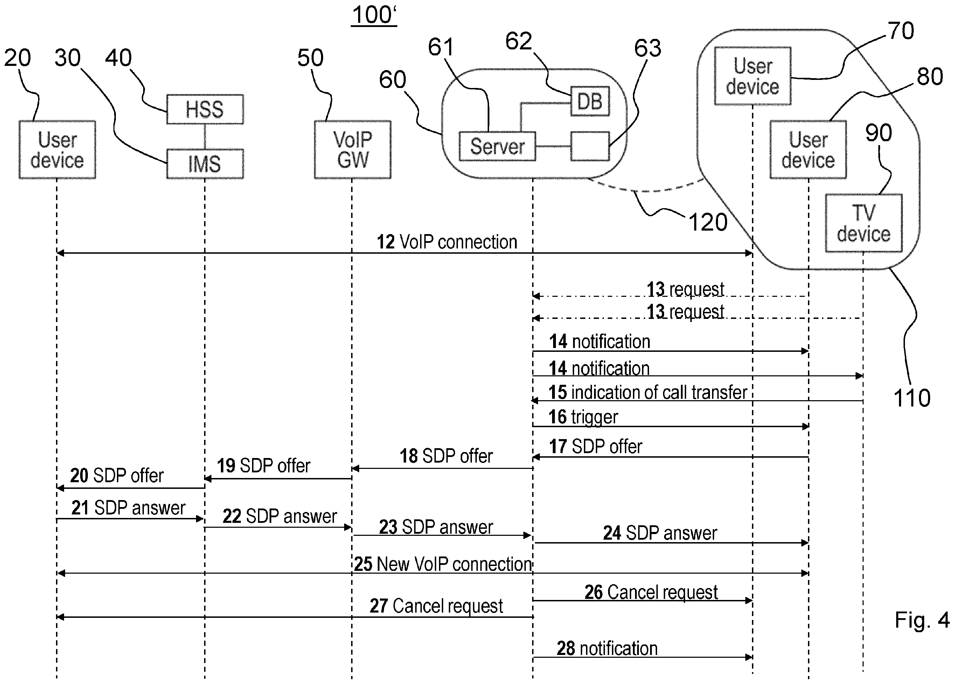

In figure 4 another exemplary message flow diagram for performing a call transfer is shown, wherein in the embodiment shown in figure 4 the call transfer is initiated by a non-VoIP capable device 90 associated with the customer 110.

In the shown embodiment, also the non-VoIP capable device 90, e.g. a television device, is informed about the ongoing call between the calling device 20 and the VoIP capable device 70 with the respective VoIP communication session being established in step 12. The customer may decide to continue the ongoing call on a different device, which may again be the device 80. In the embodiment shown in figure 4, however, the customer makes the selection, to which device the ongoing call shall be transferred, on a third device, which may be a non-VoIP capable device, such as device 90. By performing step 14 and optionally also step 13, the device 90 has been informed about the ongoing call using one of the above-described push or pull modes.

After the customer has made his selection on device 90, the device 90 in step 15 sends a respective request for call transfer to the CMS system 60, wherein the request comprises an information identifying an ongoing call and an information identifying the VoIP capable device to which the identified ongoing call is to be transferred, in the shown example an information identifying the ongoing call between the calling device 20 and the VoIP capable device 70 and an information identifying device 80 as the device to take over the call.

The request message is received and analyzed by the CMS system 60 to determine what to do. In the present exemplary case, the CMS system 60 recognizes that the ongoing call between the calling device 20 and the VoIP capable device 70 shall be transferred to device 80, wherein this information has been received from a different device, i.e. device 90. As a result, the CMS system 60 in step 16 sends a trigger message to device 80, by which the device 80 is triggered to initiate a call transfer of the ongoing call to itself.

In response to receiving the trigger message, the VoIP capable device 80 in step 17 sends a request to take the call to the CMS system 60, said request preferably comprising a respective SDP offer, which preferably includes the address of the calling device 20. Preferably, the message sent from the device 80 to the CMS system 60 in step 17 is identical to the message, which is sent from the device 80 to the CMS system 60 in step 17 of the embodiment described above with respect to figure 3. Accordingly, the steps 18 to 28 shown in figure 4 are performed in identical or similar manner as described above with respect to figure 3.

It is to be noted that a call transfer may also be performed from the calling device 20 to a different party registered on the IMS system 30 and connected to the IMS system 30. Such a call transfer may be performed using known SIP methods and may be attended or unattended. Since the CMS system 60 is involved in organizing such a call transfer, the CMS system 60 gets aware of the changed calling party.

If the notification of ongoing calls is performed in push mode, after such a call transfer being performed, a new notification message, analogous to the above-described step 14, is sent to the respective customer's devices by the CMS system 60, in order to transmit an updated list of ongoing calls, thus informing these devices of the changed calling device. If the pull mode is utilized, the CMS system 60, being aware of the call transfer, will accordingly include respectively updated information, when responding to queries for a list of ongoing calls, which it receives from a customer's device.

## Claims

1. A method for managing and/or signaling at least one VoIP call using a communication system (100; 100') that comprises an IP multimedia subsystem, IMS system (30) and a cloud-based customer management system (60) registered on the IMS system (30), wherein a VoIP capable device (70) is associated with a customer (110), wherein an address is assigned to the VoIP capable device (70) and registered together with an identifier of the customer (110) on the cloud-based customer management system (60), the method comprising the steps of:
a) Receiving, at the IMS system (30), a VoIP session request message from a calling party (20), wherein the VoIP session request message includes a session description information, SDP offer and the address of the VoIP capable device (70);
b) forwarding, by the IMS system (30), the VoIP session request message to the cloud-based customer management system (60);
c) Sending, by the cloud-based customer management system (60), in response to the VoIP session request message a first notification message to the VoIP capable device (70), the first notification message including an information of an incoming VoIP call;
d) Notifying, in response to the first notification message, the cloud-based customer management system (60), that the VoIP capable device (70) is prepared to accept the incoming VoIP call;
e) Forwarding, by the cloud-based customer management system (60), the VoIP session request message to the VoIP capable device (70);
f) Sending, by the VoIP capable device (70), a message including an SDP answer in response to the SDP offer to the cloud-based customer management system (60);
g) Forwarding the SDP answer, by the cloud-based customer management system (60), to the IMS system (30), the method further **characterised in that** the ongoing call between the calling party (20) and the VoIP capable device (70) notified at step d) to the cloud-based customer management system is transferred from the VoIP capable device (70) notified at step d) to the cloud-based customer management system to a different VoIP capable device (80) associated with the customer, wherein, for initiating the call transfer, the cloud-based customer management system (60) is notified of the VoIP capable device (80) to which the ongoing call is to be transferred, in particular by the VoIP capable device (80) to which the ongoing call is to be transferred or by a non-VoIP capable device (90) associated with the customer..

2. The method of claim 1, wherein the IMS system (30) is configured to notify, once the cloud-based customer management system (60) is registered on the IMS system (30), the cloud-based customer management system (60) of any invite message concerning a VoIP call.

3. The method according to claim 1 or 2, wherein at least two VoIP capable devices (70, 80) are associated with the customer (110), a different address being assigned to each of the VoIP capable devices (70, 80), wherein the different addresses are registered together with the identifier of the customer (110) on the cloud-based customer management system (60), the method comprising the steps of:
a) Receiving, at the IMS system (30), a VoIP session request message from a calling party (20), a VoIP session request message including a session description information, SDP offer and the address of one of the at least two VoIP capable devices (70, 80);
b) forwarding, by the IMS system (30), the VoIP session request message to the cloud-based customer management system (60);
c) Sending, by the cloud-based customer management system (60), in response to the VoIP session request message a first notification message to each of the at least two VoIP capable devices (70, 80) associated with the customer (110), the first notification message including an information about an incoming VoIP call;
d) Notifying the cloud-based customer management system (60) of the VoIP capable device (70) of the at least two VoIP capable devices (70, 80), which is prepared to accept the incoming VoIP call;
e) Forwarding, by the cloud-based customer management system (60), the VoIP session request message only to said VoIP capable device (70) notified at step d) to the cloud-based customer management system (60);
f) Sending, by said VoIP capable device (70) notified at step d) to the cloud-based customer management system (60), a message including an SDP answer in response to the SDP offer to the cloud-based customer management system (60);
g) Forwarding the SDP answer, by the cloud-based customer management system (60), to the IMS system (30).

4. The method according to any one of the preceding claims,
wherein step d) comprises the step of sending, only by said VoIP capable device (70), which is prepared to accept the incoming VoIP call, in response to the first notification message a message to the cloud-based customer management system (60), indicating the acceptance of the incoming VoIP call.

5. The method according to any one of the preceding claims, wherein
a non-VoIP capable device (90) is associated with the customer (110), wherein step c) comprises the step of sending, by the cloud-based customer management system (60), a first notification message including an information about an incoming VoIP call also to the non-VoIP capable device (90) associated with the customer (110), and wherein
step d) comprises the steps of selecting, by the customer (110), only the VoIP capable device (70) of the at least two VoIP capable devices (70, 80), which is prepared to accept the incoming VoIP call, by using the non-VoIP capable device (90) and sending, by the non-VoIP capable device (90), an information about the selected VoIP capable device (70) to the cloud-based customer management system (90).

6. The method according to any one of the preceding claims,
wherein, in response to the first notification message received at step c), an optic and/or acoustic signal indicating an incoming VoIP call is generated by each of the devices (70, 80, 90) associated with the customer (110), and wherein a second notification message is sent, by the cloud-based customer management system (60), to each of the VoIP capable device (80) not notified at step d) to the cloud-based customer management system, wherein each of the second notification message includes a command to stop generating the optic and/or acoustic signal.

7. The method according to any one of the preceding claims, wherein
step g) comprises the steps of forwarding the SDP answer from the IMS system (30) to the calling party (20) and establishing a VoIP session between the calling party (20) and said VoIP capable device (70) notified at step d) to the cloud-based customer management system (60), wherein a call notification message for notifying about an ongoing call is sent, by the cloud-based customer management system (60), to at least one VoIP capable device associated with the customer different from said VoIP capable device (70) notified at step d) to the cloud-based customer management system and/or to at least one non-VoIP capable device associated with the customer, wherein said call notification message in particular comprises a call identification information identifying the ongoing call between the calling party (20) and the VoIP capable device (70) notified at step d) to the cloud-based customer management system and an information identifying the calling party (20).

8. The method according to claim 7, wherein the cloud-based customer management system (60) sends the call notification message to the at least one VoIP capable device (80) associated with the customer different from said VoIP capable device (70) notified at step d) to the cloud-based customer management system and/or to the at least one non-VoIP capable device (90) associated with the customer in response to a request received from the respective VoIP capable device or non-VoIP capable device.

9. A communication system (100, 110'), comprising
**an IP** multimedia subsystem, IMS system (30) and
a cloud-based customer management system (60) registered on the IMS system (30) and configured to communicate with the IMS system (30), wherein at least one VoIP capable device (70) is associated with a customer (110), an address being assigned to the at least one VoIP capable device (70), wherein the address is registered together with an identifier of the customer on the cloud-based customer management system (60), wherein
the cloud-based customer management system (60) is configured to
- receive, from the IMS system (30), a VoIP session request message generated by a calling party (20), the VoIP session request message including a session description information, SDP offer and the address of the at least one VoIP capable device (70),
- send, in response to the VoIP session request message, a notification message to the at least one VoIP capable device (70) associated with the customer (110), the notification message including an information about an incoming VoIP call,
- receive a message notifying the cloud-based customer management system (60) of the VoIP capable device (70), which is prepared to accept the incoming VoIP call,
- forward the VoIP session request message only to said VoIP capable device (70) notified to the cloud-based customer management system (60),
- receive a message including an SDP answer from said VoIP capable device (70) notified to the cloud-based customer management system, and to
- forward the SDP answer to the IMS system (30) for forwarding the SDP answer to a calling party (20), wherein
the cloud-based customer management system (60) is configured to send a notification message for notifying about an ongoing call between a calling party (20) and a first of the at least two VoIP capable devices (70) associated with the customer to the other of the at least two VoIP capable devices associated with the customer and/or to the non-VoIP capable device (90) associated with the customer, the system being **characterised in that** the cloud-based customer management system (60) is configured to manage a call transfer of the ongoing call from the first VoIP capable device (70) to a different one of the at least two VoIP capable devices associated with the customer, wherein the cloud-based customer management system (60) is configured to receive, for initiating the call transfer, a notification of the VoIP capable device (80) to which the ongoing call is to be transferred, in particular from the VoIP capable device (80) to which the ongoing call is to be transferred or from the non-VoIP capable device (90)..

10. The communication system according to claim 9, wherein
at least two VoIP capable devices (70, 80) are associated with the customer (110), a different address being assigned to each of the at least two VoIP capable devices (70, 80) associated with the customer (110), wherein the different addresses are registered together with the identifier of the customer (110) on the cloud-based customer management system (60), wherein
the cloud-based customer management system (60) is configured to
- receive, from the IMS system (30), a VoIP session request message generated by a calling party (20), the VoIP session request message including a session description information, SDP offer and an address of one (70) of the at least two VoIP capable devices (70, 80),
- send, in response to the VoIP session request message, a notification message to each of the at least two VoIP capable devices (70, 80) associated with the customer (110), the notification message including an information about an incoming VoIP call,
- receive a message notifying the cloud-based customer management system (60) of the VoIP capable device (70) of the at least two VoIP capable devices (70, 80), which is prepared to accept the incoming VoIP call,
- forward the VoIP session request message only to said VoIP capable device (70) notified to the cloud-based customer management system (60),
- receive a message including an SDP answer from said VoIP capable device (70) notified to the cloud-based customer management system (60), and to
- forward the SDP answer to the IMS system (30) for forwarding the SDP answer to a calling party (20).

11. The communication system according to claim 9 or 10, wherein
a non-VoIP capable device (90) is associated with the customer (110), wherein the cloud-based customer management system (60) is configured to send a notification message including an information about an incoming VoIP call also to the non-VoIP capable device (90) associated with the customer (110), and wherein
the non-VoIP capable device (90) is configured to
generate in response to a customer's action an information about the VoIP capable device (70), which is prepared to accept the incoming VoIP call and to send this information to the cloud-based customer management system (60).

12. The communication system according to any one of claims 9 to 11, wherein the IMS system (30) is configured to notify, once the cloud-based customer management system (60) is registered on the IMS system (30), the cloud-based customer management system (60) of any invite message concerning a VoIP call.

13. The communication system according to any one of the claims 9 to 12, wherein the cloud-based customer management system (60) is configured to generate and store a call history with respect to the customer, wherein the call history in particular includes information about each incoming and/or outgoing VoIP call, an interruption or termination of an established VoIP session, a VoIP call acceptance or the deny of a VoIP request.

14. The communication system according to claim 13, wherein the cloud-based customer management system (60) is configured to provide at least a portion of the stored call history retrievable by the customer, wherein said portion of the stored call history in particular is stored on the cloud-based customer management system (60) in form of a webpage retrievable by the customer.

## Patentansprüche

1. Verfahren zum Verwalten und/oder Signalisieren wenigstens eines VoIP-Anrufs unter Verwendung eines Kommunikationssystems (100; 100'), das ein IP Multimedia Subsystem, IMS-System (30) und ein cloudbasiertes Kundenmanagementsystem (60), das auf dem IMS-System (30) registriert ist, umfasst, wobei ein VoIP-fähiges Gerät (70) einem Kunden (110) zugeordnet ist, wobei dem VoIP-fähigen Gerät (70) eine Adresse zugewiesen und zusammen mit einer Kennung des Kunden (110) im cloudbasierten Kundenmanagementsystem (60) registriert wird, wobei das Verfahren die folgenden Schritte umfasst:
a) Empfangen einer VoIP-Sitzungsanforderungsnachricht von einem Anrufer (20) im IMS-System (30), wobei die VoIP-Sitzungsanforderungsnachricht ein Sitzungsbeschreibungsinformation, SDP-Angebot und die Adresse des VoIP-fähigen Geräts (70) enthält;
b) Weiterleiten der VoIP-Sitzungsanforderungsnachricht durch das IMS-System (30) an das cloudbasierte Kundenmanagementsystem (60);
c) Senden einer ersten Benachrichtigungsnachricht durch das cloudbasierte Kundenmanagementsystem (60) in Antwort auf die VoIP-Sitzungsanforderungsnachricht an das VoIP-fähige Gerät (70), wobei die erste Benachrichtigungsnachricht eine Information über einen eingehenden VoIP-Anruf enthält;
d) Mitteilen dem cloudbasierten Kundenmanagementsystem (60) in Antwort auf die erste Benachrichtigungsnachricht, dass das VoIP-fähige Gerät (70) bereit ist, den eingehenden VoIP-Anruf anzunehmen;
e) Weiterleiten der VoIP-Sitzungsanforderungsnachricht durch das cloudbasierte Kundenmanagementsystem (60) an das VoIP-fähige Gerät (70);
f) Senden einer Nachricht mit einer SDP-Antwort in Antwort auf das SDP-Angebot durch das VoIP-fähige Gerät (70) an das cloudbasierte Kundenmanagementsystem (60);
g) Weiterleiten der SDP-Antwort durch das cloudbasierte Kundenmanagementsystem (60) an das IMS-System (30), wobei das Verfahren ferner **dadurch gekennzeichnet ist, dass**
der laufende Anruf zwischen dem Anrufer (20) und dem in Schritt d) dem cloudbasierten Kundenmanagementsystem mitgeteilten VoIP-fähigen Gerät (70) von dem in Schritt d) dem cloudbasierten Kundenmanagementsystem mitgeteilten VoIP-fähigen Gerät (70) an ein anderes dem Kunden zugeordnetes VoIP-fähiges Gerät (80) transferiert wird, wobei zum Initiieren des Anruftransfers dem cloudbasierten Kundenmanagementsystem (60) das VoIP-fähige Gerät (80) mitgeteilt wird, an das der laufende Anruf transferiert werden soll, insbesondere durch das VoIP-fähige Gerät (80), an das der laufende Anruf transferiert werden soll, oder durch ein nicht VoIP-fähiges Gerät (90), das dem Kunden zugeordnet ist.

2. Verfahren nach Anspruch 1, wobei das IMS-System (30) so konfiguriert ist, dass es, sobald das cloudbasierte Kundenmanagementsystem (60) auf dem IMS-System (30) registriert ist, das cloudbasierte Kundenmanagementsystem (60) über jede INVITE-Nachricht bezüglich eines VoIP-Anrufs benachrichtigt.

3. Verfahren nach Anspruch 1 oder 2, wobei dem Kunden (110) wenigstens zwei VoIP-fähige Geräte (70, 80) zugeordnet sind, wobei jedem der VoIP-fähigen Geräte (70, 80) eine andere Adresse zugewiesen ist, wobei die verschiedenen Adressen zusammen mit der Kennung des Kunden (110) im cloudbasierten Kundenmanagementsystem (60) registriert sind, wobei das Verfahren die folgenden Schritte umfasst:
a) Empfangen einer VoIP-Sitzungsanforderungsnachricht von einem Anrufer (20) im IMS-System (30), wobei die VoIP-Sitzungsanforderungsnachricht ein Sitzungsbeschreibungsinformation, SDP-Angebot und die Adresse eines der wenigstens zwei VoIP-fähigen Geräte (70, 80) enthält;
b) Weiterleiten der VoIP-Sitzungsanforderungsnachricht durch das IMS-System (30) an das cloudbasierte Kundenmanagementsystem (60);
c) Senden einer ersten Benachrichtigungsnachricht durch das cloudbasierte Kundenmanagementsystem (60) in Antwort auf die VoIP-Sitzungsanforderungsnachricht an jedes der wenigstens zwei VoIP-fähigen Geräte (70, 80), die dem Kunden (110) zugeordnet sind, wobei die erste Benachrichtigungsnachricht eine Information über einen eingehenden VoIP-Anruf enthält;
d) Mitteilen dem cloudbasierten Kundenmanagementsystem (60) das VoIP-fähige Gerät (70) der wenigstens zwei VoIP-fähigen Geräte (70, 80), das bereit ist, den eingehenden VoIP-Anruf anzunehmen;
e) Weiterleiten der VoIP-Sitzungsanforderungsnachricht durch das cloudbasierte Kundenmanagementsystem (60) nur an das in Schritt d) dem cloudbasierten Kundenmanagementsystem (60) mitgeteilte VoIP-fähige Gerät (70);
f) Senden einer Nachricht mit einer SDP-Antwort in Antwort auf das SDP-Angebot durch das dem cloudbasierten Kundenmanagementsystem (60) in Schritt d) mitgeteilte VoIP-fähige Gerät (70) an das cloudbasierte Kundenmanagementsystem (60);
g) Weiterleiten der SDP-Antwort durch das cloudbasierte Kundenmanagementsystem (60) an das IMS-System (30).

4. Verfahren nach einem der vorstehenden Ansprüche,
wobei Schritt d) den Schritt umfasst, dass nur das VoIP-fähige Gerät (70), das bereit ist, den eingehenden VoIP-Anruf anzunehmen, in Antwort auf die erste Benachrichtigungsnachricht eine Nachricht an das cloudbasierte Kundenmanagementsystem (60) sendet, welche die Annahme des eingehenden VoIP-Anrufs anzeigt.

5. Verfahren nach einem der vorstehenden Ansprüche, wobei
dem Kunden (110) ein nicht VoIP-fähiges Gerät (90) zugeordnet ist, wobei Schritt c) den Schritt umfasst, dass das cloudbasierte Kundenmanagementsystem (60) eine erste Benachrichtigungsnachricht, die eine Information über einen eingehenden VoIP-Anruf enthält, auch an das dem Kunden (110) zugeordnete nicht VoIP-fähige Gerät (90) sendet, und wobei
Schritt d) die Schritte umfasst, dass der Kunde (110) unter Verwendung des nicht VoIP-fähigen Geräts (90) nur das VoIP-fähige Gerät (70) der wenigstens zwei VoIP-fähigen Geräte (70, 80) auswählt, das bereit ist, den eingehenden VoIP-Anruf anzunehmen, und das nicht VoIP-fähige Gerät (90) eine Information über das ausgewählte VoIP-fähige Gerät (70) an das cloudbasierte Kundenmanagementsystem (90) sendet.

6. Verfahren nach einem der vorstehenden Ansprüche,
wobei in Antwort auf die in Schritt c) empfangene erste Benachrichtigungsnachricht von jedem der dem Kunden (110) zugeordneten Geräte (70, 80, 90) ein optisches und/oder akustisches Signal erzeugt wird, das einen eingehenden VoIP-Anruf anzeigt, und wobei eine zweite Benachrichtigungsnachricht vom cloudbasierten Kundenmanagementsystem (60) an jedes der VoIP-fähigen Geräte (80), das in Schritt d) nicht an das cloudbasierte Kundenmanagementsystem mitgeteilt wurde, gesendet wird, wobei jede der zweiten Benachrichtigungsnachrichten einen Befehl zum Beenden der Erzeugung des optischen und/oder akustischen Signals enthält.

7. Verfahren nach einem der vorstehenden Ansprüche, wobei
Schritt g) die Schritte umfasst, die SDP-Antwort vom IMS-System (30) an den Anrufer (20) weiterzuleiten und eine VoIP-Sitzung zwischen dem Anrufer (20) und dem in Schritt d) dem cloudbasierten Kundenmanagementsystem (60) mitgeteilten VoIP-fähigen Gerät (70) herzustellen, wobei eine Anrufbenachrichtigungsnachricht zur Benachrichtigung über einen laufenden Anruf vom cloudbasierten Kundenmanagementsystem (60) an wenigstens ein VoIP-fähiges Gerät, das dem Kunden zugeordnet ist und sich von dem in Schritt d) dem cloudbasierten Kundenmanagementsystem mitgeteilten VoIP-fähigen Gerät (70) unterscheidet, und/oder an wenigstens ein nicht VoIP-fähiges Gerät, das dem Kunden zugeordnet ist, gesendet wird, wobei die Anrufbenachrichtigungsnachricht insbesondere eine Anrufidentifikationsinformation, die den laufenden Anruf zwischen dem Anrufer (20) und dem in Schritt d) dem cloudbasierten Kundenmanagementsystem mitgeteilten VoIP-fähigen Gerät (70) identifiziert, und eine Information, die den Anrufer (20) identifiziert, umfasst.

8. Verfahren nach Anspruch 7, wobei das cloudbasierte Kundenmanagementsystem (60) die Anrufbenachrichtigungsnachricht an das wenigstens eine VoIP-fähige Gerät (80), das dem Kunden zugeordnet ist und sich von dem in Schritt d) dem cloudbasierten Kundenmanagementsystem mitgeteilten VoIP-fähigen Gerät (70) unterscheidet, und/oder an das wenigstens eine nicht VoIP-fähige Gerät (90), das dem Kunden zugeordnet ist, in Antwort auf eine von dem jeweiligen VoIP-fähigen Gerät oder nicht VoIP-fähigen Gerät empfangene Anforderung sendet.

9. Kommunikationssystem (100, 110'), umfassend
ein IP Multimedia Subsystem, IMS-System (30) und
ein cloudbasiertes Kundenmanagementsystem (60), das im IMS-System (30) registriert und zur Kommunikation mit dem IMS-System (30) ausgebildet ist, wobei wenigstens ein VoIP-fähiges Gerät (70) einem Kunden (110) zugeordnet ist, wobei dem wenigstens einen VoIP-fähigen Gerät (70) eine Adresse zugewiesen ist, wobei die Adresse zusammen mit einer Kennung des Kunden im cloudbasierten Kundenmanagementsystem (60) registriert ist, wobei das cloudbasierte Kundenmanagementsystem (60) dazu ausgebildet ist,
- vom IMS-System (30) eine von einem Anrufer (20) generierte VoIP-Sitzungsanforderungsnachricht zu empfangen, wobei die VoIP-Sitzungsanforderungsnachricht ein Sitzungsbeschreibungsinformation, SDP-Angebot und die Adresse des wenigstens einen VoIP-fähigen Geräts (70) enthält,
- in Antwort auf die VoIP-Sitzungsanforderungsnachricht eine Benachrichtigungsnachricht an das wenigstens eine dem Kunden (110) zugeordnete VoIP-fähige Gerät (70) zu senden, wobei die Benachrichtigungsnachricht eine Information über einen eingehenden VoIP-Anruf enthält,
- eine Nachricht zu empfangen, die dem cloudbasierten Kundenmanagementsystem (60) das VoIP-fähige Gerät (70) mitteilt, das bereit ist, den eingehenden VoIP-Anruf anzunehmen,
- die VoIP-Sitzungsanforderungsnachricht nur an das VoIP-fähige Gerät (70) weiterzuleiten, das dem cloudbasierten Kundenmanagementsystem (60) mitgeteilt wurde,
- eine Nachricht mit einer SDP-Antwort von dem VoIP-fähigen Gerät (70), das dem cloudbasierten Kundenmanagementsystem mitgeteilt wurde, zu empfangen, und
- die SDP-Antwort an das IMS-System (30) zum Weiterleiten der SDP-Antwort an einen Anrufer (20) weiterzuleiten, wobei
das cloudbasierte Kundenmanagementsystem (60) dazu ausgebildet ist, eine Benachrichtigungsnachricht, um über einen laufenden Anruf zwischen einem Anrufer (20) und einem ersten der wenigstens zwei VoIP-fähigen Geräte (70), die dem Kunden zugeordnet sind, zu informieren, an das andere der wenigstens zwei VoIP-fähigen Geräte, die dem Kunden zugeordnet sind, und/oder an das nicht VoIP-fähige Gerät (90), das dem Kunden zugeordnet ist, zu senden, wobei das System **dadurch gekennzeichnet ist, dass**
das cloudbasierte Kundenmanagementsystem (60) dazu ausgebildet ist, einen Anruftransfer des laufenden Anrufs vom ersten VoIP-fähigen Gerät (70) an ein anderes der wenigstens zwei dem Kunden zugeordneten VoIP-fähigen Geräte zu managen, wobei das cloudbasierte Kundenmanagementsystem (60) dazu ausgebildet ist, zum Initiieren des Anruftransfers eine Benachrichtigung des VoIP-fähigen Geräts (80), an das der laufende Anruf transferiert werden soll, zu empfangen, insbesondere von dem VoIP-fähigen Gerät (80), an das der laufende Anruf transferiert werden soll, oder von dem nicht VoIP-fähigen Gerät (90).

10. Kommunikationssystem nach Anspruch 9, wobei
dem Kunden (110) wenigstens zwei VoIP-fähige Geräte (70, 80) zugeordnet sind, wobei jedem der wenigstens zwei dem Kunden (110) zugeordneten VoIP-fähigen Geräte (70, 80) eine andere Adresse zugewiesen ist, wobei die verschiedenen Adressen zusammen mit der Kennung des Kunden (110) im cloudbasierten Kundenmanagementsystem (60) registriert sind, wobei das cloudbasierte Kundenmanagementsystem (60) dazu ausgebildet ist,
- vom IMS-System (30) eine von einem Anrufer (20) generierte VoIP-Sitzungsanforderungsnachricht zu empfangen, wobei die VoIP-Sitzungsanforderungsnachricht ein Sitzungsbeschreibungsinformation, SDP-Angebot und eine Adresse eines (70) der wenigstens zwei VoIP-fähigen Geräte (70, 80) enthält,
- in Antwort auf die VoIP-Sitzungsanforderungsnachricht eine Benachrichtigungsnachricht an jedes der wenigstens zwei dem Kunden (110) zugeordneten VoIP-fähigen Geräte (70, 80) zu senden, wobei die Benachrichtigungsnachricht eine Information über einen eingehenden VoIP-Anruf enthält,
- eine Nachricht zu empfangen, die dem cloudbasierten Kundenmanagementsystem (60) das VoIP-fähige Gerät (70) der wenigstens zwei VoIP-fähigen Geräte (70, 80) mitteilt, das bereit ist, den eingehenden VoIP-Anruf anzunehmen,
- die VoIP-Sitzungsanforderungsnachricht nur an das VoIP-fähige Gerät (70) weiterzuleiten, das dem cloudbasierten Kundenmanagementsystem (60) mitgeteilt wurde,
- eine Nachricht mit einer SDP-Antwort von dem VoIP-fähigen Gerät (70), das dem cloudbasierten Kundenmanagementsystem (60) mitgeteilt wurde, zu empfangen, und
- die SDP-Antwort an das IMS-System (30) zum Weiterleiten der SDP-Antwort an einen Anrufer (20) weiterzuleiten.

11. Kommunikationssystem nach Anspruch 9 oder 10, wobei
dem Kunden (110) ein nicht VoIP-fähiges Gerät (90) zugeordnet ist, wobei das cloudbasierte Kundenmanagementsystem (60) dazu ausgebildet ist, eine Benachrichtigungsnachricht mit einer Information über einen eingehenden VoIP-Anruf auch an das dem Kunden (110) zugeordnete nicht VoIP-fähige Gerät (90) zu senden, und wobei
das nicht VoIP-fähige Gerät (90) dazu ausgebildet ist,
in Antwort auf eine Aktion des Kunden eine Information über das VoIP-fähige Gerät (70) zu erzeugen, das bereit ist, den eingehenden VoIP-Anruf anzunehmen, und diese Information an das cloudbasierte Kundenmanagementsystem (60) zu senden.

12. Kommunikationssystem nach einem der Ansprüche 9 bis 11, wobei das IMS-System (30) so konfiguriert ist, dass es, sobald das cloudbasierte Kundenmanagementsystem (60) auf dem IMS-System (30) registriert ist, das cloudbasierte Kundenmanagementsystem (60) über jede INVITE-Nachricht bezüglich eines VoIP-Anrufs benachrichtigt.

13. Kommunikationssystem nach einem der Ansprüche 9 bis 12, wobei das cloudbasierte Kundenmanagementsystem (60) dazu ausgebildet ist, eine Anrufhistorie bezüglich des Kunden zu erzeugen und zu speichern, wobei die Anrufhistorie insbesondere Informationen über jeden eingehenden und/oder ausgehenden VoIP-Anruf, eine Unterbrechung oder Beendigung einer aufgebauten VoIP-Sitzung, eine VoIP-Anrufannahme oder die Ablehnung einer VoIP-Anfrage enthält.

14. Kommunikationssystem nach Anspruch 13, wobei das cloudbasierte Kundenmanagementsystem (60) dazu ausgebildet ist, zumindest einen Teil der gespeicherten Anrufhistorie durch den Kunden abrufbar bereitzustellen, wobei der Teil der gespeicherten Anrufhistorie insbesondere auf dem cloudbasierten Kundenmanagementsystem (60) in Form einer vom Kunden abrufbaren Webseite gespeichert ist.

## Revendications

1. Procédé de gestion et/ou de signalisation d'au moins un appel VoIP à l'aide d'un système de communication (100; 100') qui comprend un sous-système multimédia IP, système IMS, (30) et un système de gestion client basé sur le nuage (60) enregistré sur le système IMS (30), dans lequel un dispositif compatible VoIP (70) est associé à un client (110), dans lequel une adresse est attribuée au dispositif compatible VoIP (70) et enregistrée conjointement avec un identifiant du client (110) sur le système de gestion client basé sur le nuage (60), le procédé comprenant les étapes suivantes :
a) réception, au niveau du système IMS (30), d'un message de demande de session VoIP provenant d'une partie appelante (20), dans lequel le message de demande de session VoIP comporte une information de description de session, une offre SDP et l'adresse du dispositif compatible VoIP (70) ;
b) transmission, par le système IMS (30), du message de demande de session VoIP au système de gestion client basé sur le nuage (60) ;
c) envoi, par le système de gestion client basé sur le nuage (60), en réponse au message de demande de session VoIP, d'un premier message de notification au dispositif compatible VoIP (70), le premier message de notification comportant une information d'un appel VoIP entrant ;
d) notification, en réponse au premier message de notification, du système de gestion client basé sur le nuage (60), que le dispositif compatible VoIP (70) est préparé à accepter l'appel VoIP entrant ;
e) transmission, par le système de gestion client basé sur le nuage (60), du message de demande de session VoIP au dispositif compatible VoIP (70) ;
f) envoi, par le dispositif compatible VoIP (70), d'un message comportant une réponse SDP en réponse à l'offre SDP au système de gestion client basé sur le nuage (60) ;
g) transmission de la réponse SDP, par le système de gestion client basé sur le nuage (60), au système IMS (30), le procédé étant en outre **caractérisé en ce que**
l'appel en cours entre la partie appelante (20) et le dispositif compatible VoIP (70) notifié à l'étape d) au système de gestion client basé sur le nuage est transféré du dispositif compatible VoIP (70) notifié à l'étape d) au système de gestion client basé sur le nuage vers un dispositif compatible VoIP (80) différent associé au client, dans lequel, pour initier le transfert d'appel, le système de gestion client basé sur le nuage (60) est notifié du dispositif compatible VoIP (80) vers lequel l'appel en cours doit être transféré, en particulier par le dispositif compatible VoIP (80) vers lequel l'appel en cours doit être transféré ou par un dispositif non compatible VoIP (90) associé au client.

2. Procédé selon la revendication 1, dans lequel le système IMS (30) est configuré pour notifier, une fois que le système de gestion client basé sur le nuage (60) est enregistré sur le système IMS (30), le système de gestion client basé sur le nuage (60) d'un quelconque message d'invite concernant un appel VoIP.

3. Procédé selon la revendication 1 ou 2, dans lequel au moins deux dispositifs compatibles VoIP (70, 80) sont associés au client (110), une adresse différente étant attribuée à chacun des dispositifs compatibles VoIP (70, 80), dans lequel les différentes adresses sont enregistrées conjointement avec l'identifiant du client (110) sur le système de gestion client basé sur le nuage (60), le procédé comprenant les étapes suivantes :
a) réception, au niveau du système IMS (30), d'un message de demande de session VoIP provenant d'une partie appelante (20), d'un message de demande de session VoIP comportant une offre d'information de description de session, SDP, et de l'adresse de l'un des au moins deux dispositifs compatibles VoIP (70, 80) ;
b) transmission, par le système IMS (30), du message de demande de session VoIP au système de gestion client basé sur le nuage (60) ;
c) envoi, par le système de gestion client basé sur le nuage (60), en réponse au message de demande de session VoIP, d'un premier message de notification à chacun des au moins deux dispositifs compatibles VoIP (70, 80) associés au client (110), le premier message de notification comportant une information concernant un appel VoIP entrant ;
d) notification du système de gestion client basé sur le nuage (60) du dispositif compatible VoIP (70) parmi les au moins deux dispositifs compatibles VoIP (70, 80) qui est préparé à accepter l'appel VoIP entrant ;
e) transmission, par le système de gestion client basé sur le nuage (60), du message de demande de session VoIP uniquement audit dispositif compatible VoIP (70) notifié à l'étape d) au système de gestion client basé sur le nuage (60) ;
f) envoi, par ledit dispositif compatible VoIP (70) notifié à l'étape d), au système de gestion client basé sur le nuage (60), d'un message comportant une réponse SDP en réponse à l'offre SDP faite au système de gestion client basé sur le nuage (60) ;
g) transmission de la réponse SDP, par le système de gestion client basé sur le nuage (60), au système IMS (30).

4. Procédé selon l'une quelconque des revendications précédentes,
dans lequel l'étape d) comprend l'étape d'envoi, uniquement par ledit dispositif compatible VoIP (70) qui est préparé à accepter l'appel VoIP entrant, en réponse au premier message de notification, d'un message au système de gestion client basé sur le nuage (60), indiquant l'acceptation de l'appel VoIP entrant.

5. Procédé selon l'une quelconque des revendications précédentes, dans lequel
un dispositif non compatible VoIP (90) est associé au client (110), dans lequel l'étape c) comprend l'étape d'envoi, par le système de gestion client basé sur le nuage (60), d'un premier message de notification comportant une information concernant un appel VoIP entrant également au dispositif non compatible VoIP (90) associé au client (110), et dans lequel
l'étape d) comprend les étapes de sélection, par le client (110), uniquement du dispositif compatible VoIP (70) parmi les au moins deux dispositifs compatibles VoIP (70, 80) qui est préparé à accepter l'appel VoIP entrant, à l'aide du dispositif non compatible VoIP (90) et d'envoi, par le dispositif non compatible VoIP (90), d'une information concernant le dispositif compatible VoIP (70) sélectionné au système de gestion client basé sur le nuage (90).

6. Procédé selon l'une quelconque des revendications précédentes,
dans lequel, en réponse au premier message de notification reçu à l'étape c), un signal optique et/ou acoustique indiquant un appel VoIP entrant est généré par chacun des dispositifs (70, 80, 90) associés au client (110), et dans lequel un second message de notification est envoyé, par le système de gestion client basé sur le nuage (60), à chacun du dispositif compatible VoIP (80) non notifié à l'étape d) au système de gestion client basé sur le nuage, dans lequel chacun du second message de notification comporte une instruction pour arrêter la génération du signal optique et/ou acoustique.

7. Procédé selon l'une quelconque des revendications précédentes, dans lequel
l'étape g) comprend les étapes de transmission de la réponse SDP du système IMS (30) à la partie appelante (20) et d'établissement d'une session VoIP entre la partie appelante (20) et ledit dispositif compatible VoIP (70) notifié à l'étape d) au système de gestion client basé sur le nuage (60), dans lequel un message de notification d'appel pour notifier à propos d'un appel en cours est envoyé, par le système de gestion client basé sur le nuage (60), à au moins un dispositif compatible VoIP associé au client différent dudit dispositif compatible VoIP (70) notifié à l'étape d) au système de gestion client basé sur le nuage et/ou à au moins un dispositif non compatible VoIP associé au client, dans lequel ledit message de notification d'appel comprend en particulier des informations d'identification d'appel identifiant l'appel en cours entre la partie appelante (20) et le dispositif compatible VoIP (70) notifié à l'étape d) au système de gestion client basé sur le nuage et des informations identifiant la partie appelante (20).

8. Procédé selon la revendication 7, dans lequel le système de gestion client basé sur le nuage (60) envoie le message de notification d'appel à l'au moins un dispositif compatible VoIP (80) associé au client différent dudit dispositif compatible VoIP (70) notifié à l'étape d) au système de gestion client basé sur le nuage et/ou à l'au moins un dispositif non compatible VoIP (90) associé au client en réponse à une demande reçue du dispositif compatible VoIP ou du dispositif non compatible VoIP respectif.

9. Système de communication (100, 110'), comprenant
un sous-système multimédia IP, système IMS, (30) et
un système de gestion client basé sur le nuage (60) enregistré sur le système IMS (30) et configuré pour communiquer avec le système IMS (30), dans lequel au moins un dispositif compatible VoIP (70) est associé à un client (110), une adresse étant attribuée à l'au moins un dispositif compatible VoIP (70), dans lequel l'adresse est enregistrée conjointement avec un identifiant du client sur le système de gestion client basé sur le nuage (60), dans lequel
le système de gestion client basé sur le nuage (60) est configuré pour
- recevoir, de la part du système IMS (30), un message de demande de session VoIP généré par une partie appelante (20), le message de demande de session VoIP comportant une information de description de session, une offre SDP et l'adresse de l'au moins un dispositif compatible VoIP (70),
- envoyer, en réponse au message de demande de session VoIP, un message de notification à l'au moins un dispositif compatible VoIP (70) associé au client (110), le message de notification comportant une information concernant un appel VoIP entrant,
- recevoir un message notifiant le système de gestion client basé sur le nuage (60) du dispositif compatible VoIP (70) qui est préparé à accepter l'appel VoIP entrant,
- transmettre le message de demande de session VoIP uniquement audit dispositif compatible VoIP (70) notifié au système de gestion client basé sur le nuage (60),
- recevoir un message comportant une réponse SDP dudit dispositif compatible VoIP (70) notifié au système de gestion client basé sur le nuage, et
- transmettre la réponse SDP au système IMS (30) pour transmettre la réponse SDP à une partie appelante (20), dans lequel
le système de gestion client basé sur le nuage (60) est configuré pour envoyer un message de notification pour notifier un appel en cours entre une partie appelante (20) et un premier dispositif parmi les au moins deux dispositifs compatibles VoIP (70) associés au client, à l'autre dispositif des au moins deux dispositifs compatibles VoIP associés au client et/ou au dispositif non compatible VoIP (90) associé au client, le système étant **caractérisé en ce que** le système de gestion client basé sur le nuage (60) est configuré pour gérer un transfert d'appel de l'appel en cours, du premier dispositif compatible VoIP (70) vers un dispositif différent des au moins deux dispositifs compatibles VoIP associés au client, dans lequel le système de gestion client basé sur le nuage (60) est configuré pour recevoir, afin d'initier le transfert d'appel, une notification du dispositif compatible VoIP (80) vers lequel l'appel en cours doit être transféré, en particulier depuis le dispositif compatible VoIP (80) vers lequel l'appel en cours doit être transféré ou depuis le dispositif non compatible VoIP (90).

10. Système de communication selon la revendication 9, dans lequel
au moins deux dispositifs compatibles VoIP (70, 80) sont associés au client (110), une adresse différente étant attribuée à chacun des au moins deux dispositifs compatibles VoIP (70, 80) associés au client (110), dans lequel les différentes adresses sont enregistrées conjointement avec l'identifiant du client (110) sur le système de gestion client basé sur le nuage (60), dans lequel
le système de gestion client basé sur le nuage (60) est configuré pour
- recevoir, à partir du système IMS (30), un message de demande de session VoIP généré par une partie appelante (20), le message de demande de session VoIP comportant une information de description de session,une offre SDP et une adresse d'un (70) des au moins deux dispositifs compatibles VoIP (70, 80),
- envoyer, en réponse au message de demande de session VoIP, un message de notification à chacun des au moins deux dispositifs compatibles VoIP (70, 80) associés au client (110), le message de notification comportant une information concernant un appel VoIP entrant,
- recevoir un message notifiant le système de gestion client basé sur le nuage (60) du dispositif compatible VoIP (70) des au moins deux dispositifs compatibles VoIP (70, 80) qui est préparé à accepter l'appel VoIP entrant,
- transmettre le message de demande de session VoIP uniquement audit dispositif compatible VoIP (70) notifié au système de gestion client basé sur le nuage (60),
- recevoir un message comportant une réponse SDP dudit dispositif compatible VoIP (70) notifié au système de gestion client basé sur le nuage (60), et
- transmettre la réponse SDP au système IMS (30) pour transmettre la réponse SDP à une partie appelante (20).

11. Système de communication selon la revendication 9 ou 10, dans lequel
un dispositif non compatible VoIP (90) est associé au client (110), dans lequel le système de gestion client basé sur le nuage (60) est configuré pour envoyer un message de notification comportant une information concernant un appel VoIP entrant également au dispositif non compatible VoIP (90) associé au client (110), et dans lequel
le dispositif non compatible VoIP (90) est configuré pour
générer, en réponse à une action d'un client, une information concernant le dispositif compatible VoIP (70) qui est préparé à accepter l'appel VoIP entrant et à envoyer cette information au système de gestion client basé sur le nuage (60).

12. Système de communication selon l'une quelconque des revendications 9 à 11, dans lequel le système IMS (30) est configuré pour notifier, une fois que le système de gestion client basé sur le nuage (60) est enregistré sur le système IMS (30), le système de gestion client basé sur le nuage (60) d'un quelconque message d'invite concernant un appel VoIP.

13. Système de communication selon l'une quelconque des revendications 9 à 12, dans lequel le système de gestion client basé sur le nuage (60) est configuré pour générer et stocker un historique d'appels par rapport au client, dans lequel l'historique d'appels comporte en particulier des informations sur chaque appel VoIP entrant et/ou sortant, une interruption ou une terminaison d'une session VoIP établie, une acceptation d'appel VoIP ou le refus d'une demande VoIP.

14. Système de communication selon la revendication 13, dans lequel le système de gestion client basé sur le nuage (60) est configuré pour fournir au moins une portion de l'historique d'appels stocké récupérable par le client, dans lequel ladite portion de l'historique d'appels stocké est en particulier stockée sur le système de gestion client basé sur le nuage (60) sous la forme d'une page Web récupérable par le client.
